(19) Europäisches Patentamt
European Patent Office
Office européen des brevets

(11) **EP 4 518 524 A1**

(12) **EUROPEAN PATENT APPLICATION**
published in accordance with Art. 153(4) EPC

(43) Date of publication:
**05.03.2025 Bulletin 2025/10**

(21) Application number: **23758505.4**

(22) Date of filing: **26.04.2023**

(51) International Patent Classification (IPC):
*H04W 72/232* (2023.01)   *H04L 5/00* (2006.01)
*H04L 27/26* (2006.01)   *H04B 7/0413* (2017.01)
*H04W 72/12* (2023.01)

(52) Cooperative Patent Classification (CPC):
**H04B 7/0413; H04L 5/00; H04L 27/26;**
**H04W 72/12; H04W 72/232**

(86) International application number:
**PCT/KR2023/005649**

(87) International publication number:
**WO 2023/211133 (02.11.2023 Gazette 2023/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.04.2022  US 202263336296 P**

(71) Applicant: **LG Electronics Inc.**
**Seoul 07336 (KR)**

(72) Inventors:
• **KIM, Hyungtae**
  **Seoul 06772 (KR)**
• **JEONG, Chanho**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING OR RECEIVING UPLINK DEMODULATION REFERENCE SIGNAL IN WIRELESS COMMUNICATION SYSTEM**

(57)    A method and an apparatus for transmitting or receiving an uplink demodulation reference signal in a wireless communication system are disclosed. A method performed by a terminal in a wireless communication system according to an embodiment of the present disclosure includes receiving from a network downlink control information (DCI) related to scheduling of a physical uplink shared channel (PUSCH); and transmitting to the network the PUSCH based on the DCI, and the DCI includes a field indicating an antenna port, and based on a value of a rank for the PUSCH exceeding 4, a field indicating the antenna port may indicate information other than an antenna port for a demodulation reference signal (DMRS) associated with the PUSCH.

FIG.8

Receive PUSCH scheduling DCI including antenna port field indicating information other than DMRS information for over rank 4 — S810

Transmit PUSCH based on DCI — S820

**Description**

[Technical Field]

The present disclosure relates to a wireless communication system, and more particularly, to a method and an apparatus for transmitting or receiving an uplink demodulation reference signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and an apparatus for transmitting or receiving an uplink demodulation reference signal in a wireless communication system.

An additional technical problem of the present disclosure is to provide a method and an apparatus for transmitting or receiving downlink control information based on an antenna port set per rank for an uplink demodulation reference signal of rank 5 or higher in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a terminal in a wireless communication system according to an aspect of the present disclosure includes receiving from a network downlink control information (DCI) related to scheduling of a physical uplink shared channel (PUSCH); and transmitting to the network the PUSCH based on the DCI, and the DCI includes a field indicating an antenna port, and based on a value of a rank for the PUSCH exceeding 4, a field indicating the antenna port may indicate information other than an antenna port for a demodulation reference signal (DMRS) associated with the PUSCH.

A method performed by a base station in a wireless communication system according to an additional aspect of the present disclosure includes transmitting to a terminal downlink control information (DCI) related to scheduling of a physical uplink shared channel (PUSCH); and receiving from the terminal the PUSCH based on the DCI, and the DCI includes a field indicating an antenna port, and based on a value of a rank for the PUSCH exceeding 4, a field indicating the antenna port may indicate information other than an antenna port for a demodulation reference signal (DMRS) associated with the PUSCH.

[Technical Effects]

According to the present disclosure, a method and an apparatus for transmitting or receiving an uplink demodulation reference signal in a wireless communication system may be provided.

According to the present disclosure, a method and an apparatus for transmitting or receiving downlink control information based on an antenna port set per rank for an uplink demodulation reference signal of rank 5 or higher in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 is a diagram for describing an example of a method for transmitting an uplink demodulation reference signal of a terminal according to the present disclosure.
FIG. 9 is a diagram for describing an example of a method for receiving an uplink demodulation reference signal of a base station according to the present disclosure.
FIG. 10 illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator

RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

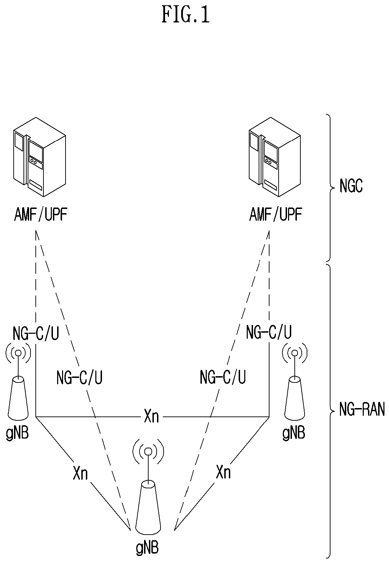

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

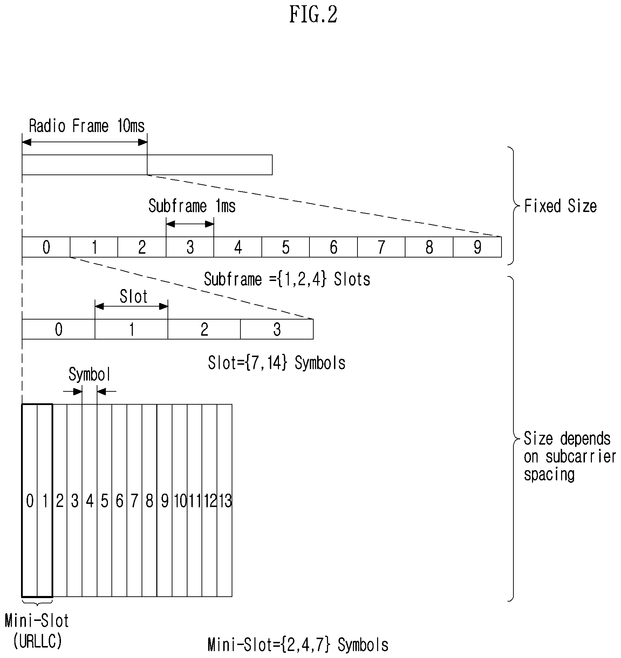

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |

(continued)

| μ | Δf=2$^{μ}$·15 [kHz] | CP |
|---|---|---|
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}·N_f)$. Here, $\Delta f_{max}$ is $480·10^3$ Hz and $N_f$ is 4096. Downlink and uplink transmission is configured (organized) with a radio frame having a duration of $T_f=1/(\Delta f_{max}N_f/100)·T_c$=10ms. Here, a radio frame is configured with 10 subframes having a duration of $T_{sf}=(\Delta f_{max}N_f/1000)·T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{μ}\in\{0,...,N_{slot}^{subframe,μ}-1\}$ in a subframe and are numbered in an increasing order of $n_{s,f}^{μ}\in\{0,...,N_{slot}^{frame,μ}-1\}$ in a radio frame. One slot is configured with $N_{symb}^{slot}$ consecutive OFDM symbols and $N_{symb}^{slot}$ is determined according to CP. A start of a slot $n_s^{μ}$ in a subframe is temporally arranged with a start of an OFDM symbol $n_s^{μ}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,μ}$) and the number of slots per subframe ($N_{slot}^{subframe,μ}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,μ}$ | $N_{slot}^{subframe,μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,μ}$ | $N_{slot}^{subframe,μ}$ |
|---|---|---|---|
| 2 | 12 | 40 | 4 |

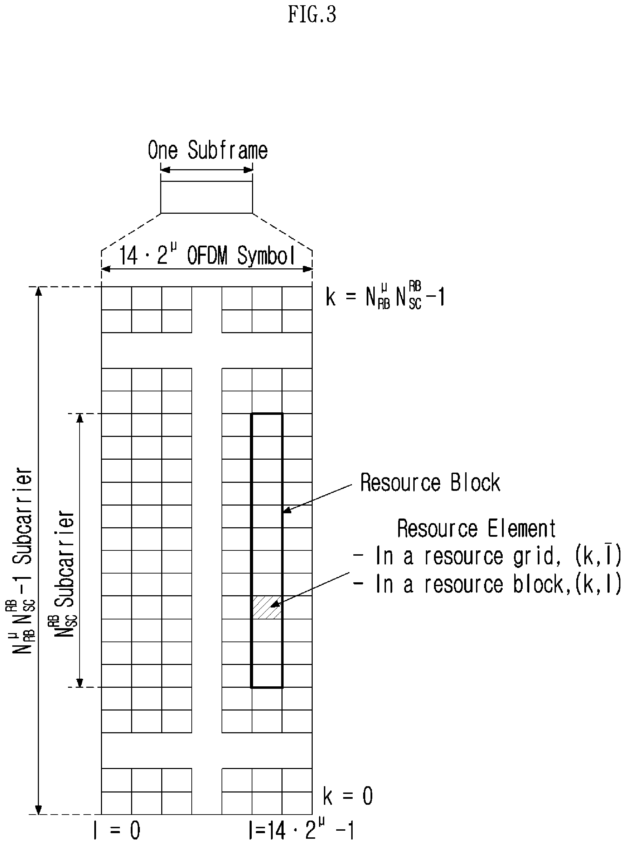

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \le N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu} N_{sc}^{RB}-1$ is an index in a frequency domain and l'=0,...,$2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

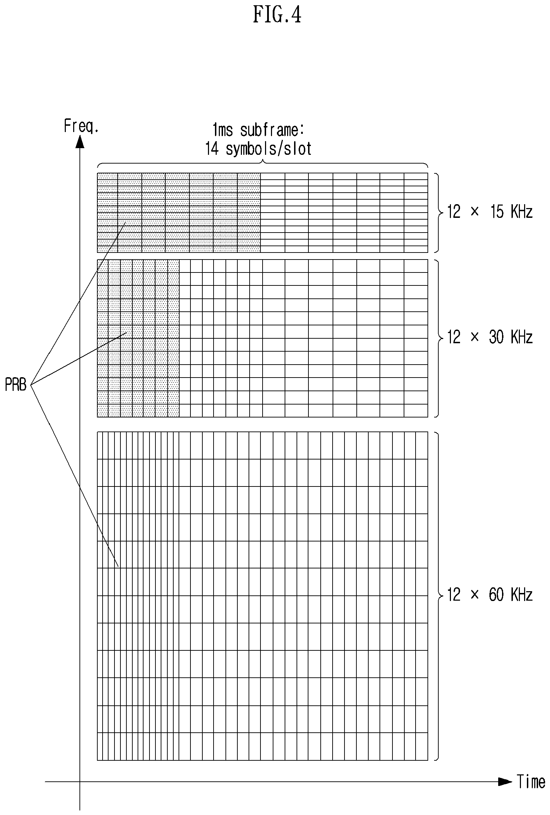

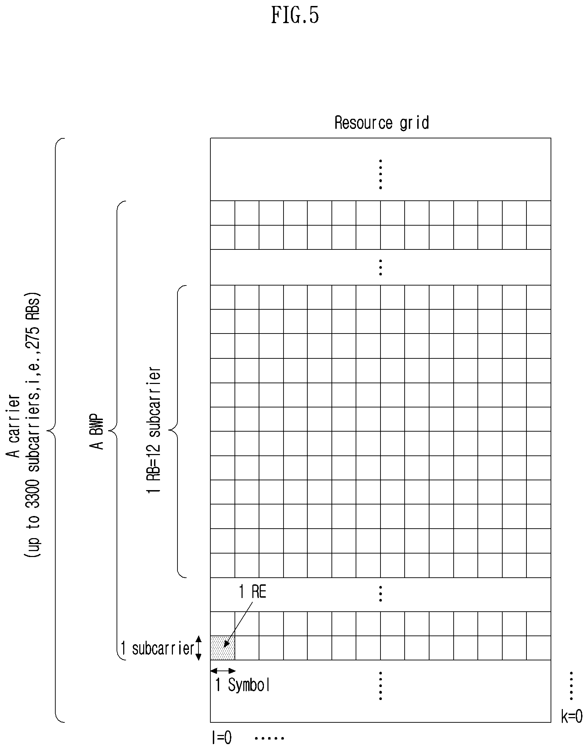

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

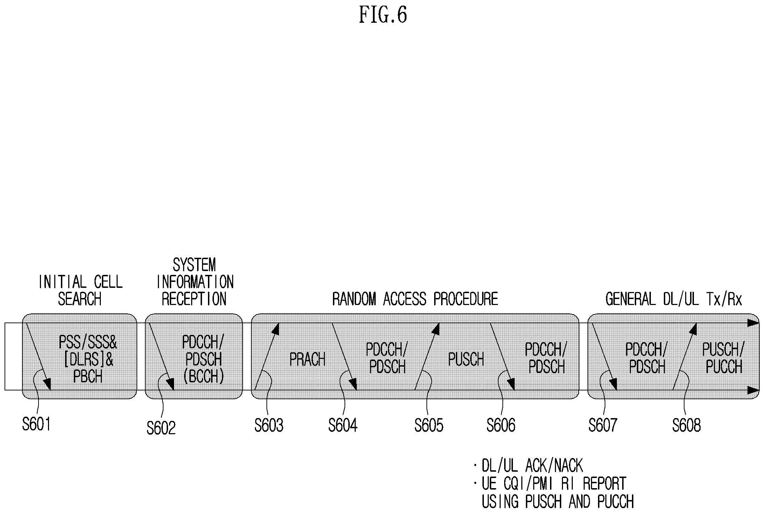

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |

(continued)

| DCI Format | Use |
|---|---|
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, multiple DCI based non-coherent joint transmission (NCJT)/single DCI based NCJT will be described.

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as "multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Multiple TRPs (MTRPs) performing NCJT transmission may transmit DL data to a terminal by using any one scheme of the following two schemes.

First, 'a single DCI based MTRP scheme' is described. MTRPs cooperatively transmit one common PDSCH and each TRP participating in cooperative transmission spatially partitions and transmits a corresponding PDSCH into different layers (i.e., different DMRS ports) by using the same time frequency resource. Here, scheduling information on the PDSCH is indicated to UE through one DCI and which DMRS (group) port uses which QCL RS and QCL type information is indicated by the corresponding DCI (which is different from DCI indicating a QCL RS and a type which will be commonly applied to all DMRS ports indicated as in the existing scheme). In other words, M TCI states may be indicated through a TCI(Transmission Configuration Indicator) field in DCI (e.g., for 2 TRP cooperative transmission, M=2) and a QCL RS and a type may be indicated by using M different TCI states for M DMRS port group. In addition, DMRS port information may be indicated by using a new DMRS table.

Next, 'a multiple DCI based MTRP scheme' is described. Each of MTRPs transmits different DCI and PDSCH and (part or all of) the corresponding PDSCHs are overlapped each other and transmitted in a frequency time resource. Corresponding PDSCHs may be scrambled through a different scrambling ID (identifier) and the DCI may be transmitted through a CORESET belonging to a different CORESET group. (Here, a CORESET group may be identified by an index defined in a CORESET configuration of each CORESET. For example, when index = 0 is configured for CORESETs 1 and 2 and index = 1 is configured for CORESETs 3 and 4, CORESETs 1 and 2 are CORESET group 0 and CORESET 3 and 4 belong to a CORESET group 1. In addition, when an index is not defined in a CORESET, it may be construed as index=0) When a plurality of scrambling IDs are configured or two or more CORESET groups are configured in one serving cell, a UE may notice that it receives data according to a multiple DCI based MTRP operation.

Alternatively, whether of a single DCI based MTRP scheme or a multiple DCI based MTRP scheme may be indicated to UE through separate signaling. In an example, for one serving cell, a plurality of CRS (cell reference signal) patterns may be indicated to UE for a MTRP operation. In this case, PDSCH rate matching for a CRS may be different depending on a single DCI based MTRP scheme or a multiple DCI based MTRP scheme (because a CRS pattern is different).

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

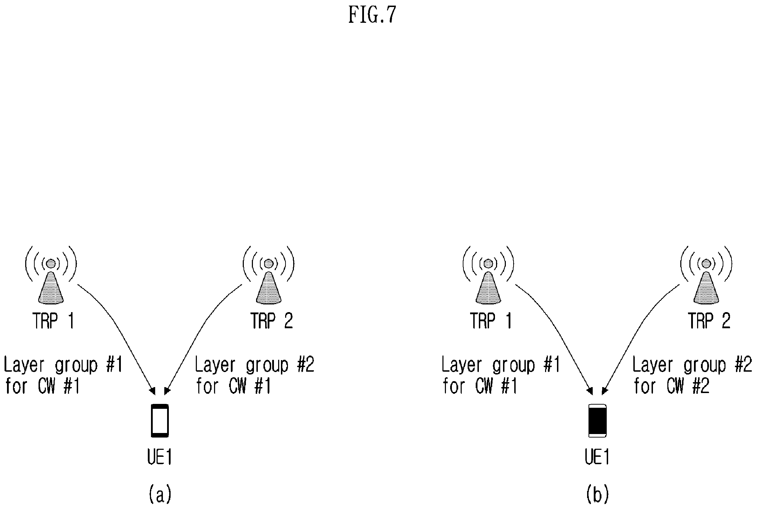

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following method is discussed.

1) Method 1 (SDM): Time and frequency resource allocation is overlapped and n (n<=Ns) TCI states in a single slot

1-a) Method 1a

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule.

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

- At one transmission time (occasion), the same TB having one DMRS port associated with multiple TCI state indexes is transmitted in one layer or the same TB having multiple DMRS ports one-to-one associated with multiple TCI state indexes is transmitted in one layer.

In case of the method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at every transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- Every transmission time (occasion) across K slots uses a common MCS with a single or multiple DMRS port(s).
- A RV/TCI may be the same or different at a different transmission time (occasion).

Hereinafter, MTRP URLLC is described.

In the present disclosure, DL MTRP URLLC means that multiple TRPs transmit the same data (e.g., the same TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is configured from a base station for which QCL RS/type (i.e., a DL TCI state) should be used in a layer/time/frequency resource receiving the same data/DCI. For example, when the same data/DCI is received in resource 1 and resource 2, a DL TCI state used in resource 1 and a DL TCI state used in resource 2 may be configured. UE may achieve high reliability because it receives the same data/DCI through resource 1 and resource 2. Such DL MTRP URLLC may be applied to a PDSCH/a PDCCH.

And, in the present disclosure, UL MTRP-URLLC means that multiple TRPs receive the same data/UCI(uplink control information) from any UE by using a different layer/time/frequency resource. For example, TRP 1 receives the same data/DCI from UE in resource 1 and TRP 2 receives the same data/DCI from UE in resource 2 to share received data/DCI through a backhaul link connected between TRPs. UE configured with a UL MTRP-URLLC transmission method transmits the same data/UCI by using a different layer/time/frequency resource. In this case, UE is configured from a base station for which Tx beam and which Tx power (i.e., a UL TCI state) should be used in a layer/time/frequency resource transmitting the same data/DCI. For example, when the same data/UCI is transmitted in resource 1 and resource 2, a UL TCI state used in resource 1 and a UL TCI state used in resource 2 may be configured. Such UL MTRP URLLC may be applied to a PUSCH/a PUCCH.

In addition, in the present disclosure, when a specific TCI state (or TCI) is used (or mapped) in receiving data/DCI/UCI for any frequency/time/space resource (layer), it means as follows. For a DL, it may mean that a channel is estimated from a DMRS by using a QCL type and a QCL RS indicated by a corresponding TCI state in that frequency/time/-space resource (layer) and data/DCI is received/demodulated based on an estimated channel. In addition, for a UL, it may mean that a DMRS and data/UCI are transmitted/modulated by using a Tx beam and power indicated by a corresponding TCI state in that frequency/time/space resource.

Here, an UL TCI state has Tx beam and/or Tx power information of UE and may configure spatial relation information, etc. to UE through other parameter, instead of a TCI state. An UL TCI state may be directly indicated by UL grant DCI or may mean spatial relation information of a SRS resource indicated by a SRI (sounding resource indicator) field of UL grant DCI. Alternatively, it may mean an open loop (OL) Tx power control parameter connected to a value indicated by a SRI field of UL grant DCI (e.g., j: an index for open loop parameter Po and alpha (up to 32 parameter value sets per cell), q_d: an index of a DL RS resource for PL (pathloss) measurement (up to 4 measurements per cell), I: a closed loop power control process index (up to 2 processes per cell)).

Hereinafter, MTRP eMBB is described.

In the present disclosure, MTRP-eMBB means that multiple TRPs transmit different data (e.g., a different TB) by using a different layer/time/frequency. UE configured with a MTRP-eMBB transmission method receives an indication on multiple TCI states through DCI and assumes that data received by using a QCL RS of each TCI state is different data.

On the other hand, UE may figure out whether of MTRP URLLC transmission/reception or MTRP eMBB transmission/reception by separately dividing a RNTI for MTRP-URLLC and a RNTI for MTRP-eMBB and using them. In other words, when CRC masking of DCI is performed by using a RNTI for URLLC, UE considers it as URLLC transmission and when CRC masking of DCI is performed by using a RNTI for eMBB, UE considers it as eMBB transmission. Alternatively, a base station may configure MTRP URLLC transmission/reception or TRP eMBB transmission/reception to UE through other new signaling.

In a description of the present disclosure, it is described by assuming cooperative transmission/reception between 2 TRPs for convenience of a description, but a method proposed in the present disclosure may be also extended and applied in 3 or more multiple TRP environments and in addition, it may be also extended and applied in multiple panel environments (i.e., by matching a TRP to a panel). In addition, a different TRP may be recognized as a different TCI state to UE. Accordingly, when UE receives/transmits data/DCI/UCI by using TCI state 1, it means that data/DCI/UCI is received/transmitted from/to a TRP 1.

Hereinafter, methods proposed in the present disclosure may be utilized in a situation that MTRPs cooperatively transmit a PDCCH (repetitively transmit or partitively transmit the same PDCCH). In addition, methods proposed in the present disclosure may be also utilized in a situation that MTRPs cooperatively transmit a PDSCH or cooperatively receive a PUSCH/a PUCCH.

In addition, in the present disclosure, when a plurality of base stations (i.e., MTRPs) repetitively transmit the same PDCCH, it may mean the same DCI is transmitted through multiple PDCCH candidates and it may also mean that a plurality of base stations repetitively transmit the same DCI. Here, the same DCI may mean two DCI with the same DCI format/size/payload. Alternatively, although two DCI has a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception occasion of DCI, so if DCI received at n occasions and DCI received at n+1 occasions inform UE of the same scheduling result, a TDRA field of two DCI is different and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of the other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure, when a plurality of base stations (i.e., MTRPs) partitively transmit the same PDCCH, it means that one DCI is transmitted through one PDCCH candidate, but TRP 1 transmits some resources that such a PDCCH candidate is defined and TRP 2 transmits the remaining resources. For example, when a PDCCH candidate corresponding to aggregation level m1+m2 is partitively transmitted by TRP 1 and TRP 2, a PDCCH candidate may be divided into PDCCH candidate 1 corresponding to aggregation level m1 and PDCCH candidate 2 corresponding to aggregation level m2, and TRP 1 may transmit PDCCH candidate 1 and TRP 2 may transmit PDCCH candidate 2 to a different time/frequency resource. After receiving PDCCH candidate 1 and PDCCH candidate 2, UE may generate a PDCCH candidate corresponding to aggregation level m1+m2 and try DCI decoding.

In addition, in the present disclosure, when UE repetitively transmits the same PUSCH so that a plurality of base stations (i.e., MTRPs) can receive it, it may mean that UE transmitted the same data through multiple PUSCHs. In this case, each PUSCH may be optimized and transmitted to an UL channel of a different TRP. For example, when UE repetitively transmits the same data through PUSCH 1 and 2, PUSCH 1 is transmitted by using UL TCI state 1 for TRP 1 and in this case, link adaptation such as a precoder/MCS, etc. may be also scheduled/applied to a value optimized for a channel of TRP 1. PUSCH 2 is transmitted by using UL TCI state 2 for TRP 2 and link adaptation such as a precoder/MCS, etc. may be also scheduled/applied to a value optimized for a channel of TRP 2. In this case, PUSCH 1 and 2 which are repetitively transmitted may be transmitted at a different time to be TDM, FDM or SDM.

In addition, in the present disclosure, when UE partitively transmits the same PUSCH so that a plurality of base stations (i.e., MTRPs) can receive it, it may mean that UE transmits one data through one PUSCH, but it divides resources allocated to that PUSCH, optimizes them for an UL channel of a different TRP and transmits them. For example, when UE transmits the same data through 10 symbol PUSCHs, data is transmitted by using UL TCI state 1 for TRP 1 in 5 previous symbols and in this case, link adaptation such as a precoder/MCS, etc. may be also scheduled/applied to a value optimized for a channel of TRP 1. The remaining data is transmitted by using UL TCI state 2 for TRP 2 in the remaining 5 symbols and in this case, link adaptation such as a precoder/MCS, etc. may be also scheduled/applied to a value optimized for a channel of TRP 2. In the example, transmission for TRP 1 and transmission for TRP 2 are TDM-ed by dividing one PUSCH into time resources, but it may be transmitted by a FDM/SDM method.

In addition, similarly to the above-described PUSCH transmission, also for a PUCCH, UE may repetitively transmit the same PUCCH or may partitively transmit the same PUCCH so that a plurality of base stations (i.e., MTRPs) receive it.

Hereinafter, a proposal of the present disclosure may be extended and applied to a variety of channels such as a PUSCH/a PUCCH/a PDSCH/a PDCCH, etc.

A proposal of the present disclosure may be extended and applied to both a case in which various uplink/downlink channels are repetitively transmitted to a different time/frequency/space resource and a case in which various uplink/downlink channels are partitively transmitted to a different time/frequency/space resource.

In the present disclosure, a transmission occasion (TO) may correspond to a resource unit in which a channel is transmitted/received or a candidate resource unit in which a channel may be transmitted/received. For example, when multiple channels are transmitted in the TDM scheme, TO may mean each channel that is or may be transmitted in different time resources. For example, when multiple channels are transmitted in the FDM scheme, TO may mean each channel that is or may be transmitted in different frequency resources (e.g., RBs). For example, when multiple channels are transmitted in the SDM scheme, TO may mean each channel that is or may be transmitted in different layers/beams/DMRS ports. One TCI state may be mapped to each TO. When the same channel is repeatedly transmitted, a complete DCI/data/UCI may be transmitted in one TO, and the receiving end may receive multiple TOs to increase the reception success rate.

The above-described single DCI (S-DCI)-based multi-TB PUSCH/PDSCH scheduling scheme may be applied, for example, to a case that one DCI simultaneously schedules a plurality of PUSCH/PDSCHs in a very high frequency band (e.g., band above 5.26 GHz). For example, multiple time-domain resource allocations (TDRAs) (or TOs) may be indicated at once through a TDRA field of DCI for scheduling PUSCH, and different TBs may be transmitted through a PUSCH in each TO. Frequency domain resource allocation (FDRA), MCS, transmit precoding matrix indicator (TPMI), SRI values of Multi-TB PUSCH scheduling DCI may be commonly applied to a plurality of TBs scheduled by the corresponding DCI. In addition, NDI, RV may be individually/independently indicated for each TB through the multi-TB PUSCH scheduling DCI. In addition, in such multi-TB PUSCH scheduling DCI, one value is indicated for the HARQ (process) number (HPN), but values sequentially increasing in the TO order from the initial TO may be applied.

Additionally, a S-DCI based M-TRP PUSCH repetition transmission scheme may be considered. In this regard, the base station configures two SRS sets to the terminal for S-DCI-based M-TRP PUSCH transmission, and each set is used to indicate a UL Tx port for/to TRP 1 and TRP 2, and a UL beam /QCL information. In addition, the base station performs SRS resource indication for each SRS resource set and may indicate up to two PC parameter sets, through two SRI fields included in one DCI.

For example, the first SRI field may indicate the SRS resource and PC parameter set defined in SRS resource set 0, and the second SRI field may indicate the SRS resource and PC parameter set defined in SRS resource set 1. The terminal may receive an indication of the UL Tx port, PC parameter set, and UL beam/QCL information for TRP 1 through the first SRI field, and, through this, the terminal performs PUSCH transmission in TO corresponding to SRS resource set 0. Similarly, the terminal may receive an indication of the UL Tx port, PC parameter set, and UL beam/QCL information for TRP 2 through the second SRI field, and through this, the terminal may perform PUSCH transmission in TO corresponding to SRS resource set 1.

In addition to the above-described SRI field, an existing one field may be extended to two fields so that TPMI, PTRS, and TPC-related fields may be indicated for each TRP.

Additionally, an SRS resource set indication field (e.g., a 2-bit field) may be defined, and based on this, the terminal may perform the S-TRP PUSCH repetition transmission by selecting a specific one of the two SRS resource sets, or may perform M-TRP PUSCH repetition transmission by selecting both SRS resource sets.

For example, codepoint "00" of the SRS resource set indication field may indicate the first SRS resource set, and codepoint "01" may indicate the second SRS resource set/definition. When codepoint "00" or "01" is indicated, S-TRP PUSCH transmission corresponding to the SRS resource set indicated by each codepoint may be performed. In addition, codepoint "10" may be configured/defined to indicate [first SRS resource set, second SRS resource set], and codepoint "11" may be configured/defined to indicate [second SRS resource set, first SRS resource set]. When codepoint "10" or "11" is indicated, M-TRP PUSCH transmission may be performed in the order in which SRS resource set pairs are indicated. When codepoint "10" is indicated, the first SRS resource set corresponds to the first PUSCH TO, and when codepoint "11" is indicated, the second SRS resource set corresponds to the first PUSCH TO.

Additionally, a single PUCCH resource-based M-TRP repetition PUCCH transmission scheme may be considered. In this regard, for single PUCCH resource-based M-TRP PUCCH transmission, the base station may activate/configure two spatial relation info on a single PUCCH resource to the terminal (if FR1, two PC parameter sets may be activated/configured). When UL UCI is transmitted through a corresponding PUCCH resource, each spatial relation info is used to indicate spatial relation info toward TRP 1 and TRP 2 to the terminal, respectively. For example, through the value indicated in the first spatial relation info, the terminal is indicated with Tx beam/PC parameter(s) toward TRP 1, and the terminal performs PUCCH transmission in the TO corresponding to TRP 1 by using the corresponding information. Similarly, through the value indicated in the second spatial relation info, the terminal is indicated the Tx beam/PC parameter(s) toward TRP 2, and the terminal performs PUCCH transmission in the TO corresponding to TRP 2 by using the corresponding information.

In addition, for M-TRP PUCCH repetition transmission, a configuration method has been improved so that two spatial relation info may be configured in a PUCCH resource. That is, when power control (PC) parameters such as PLRS, Alpha, P0, and closed loop index are set/configured for each spatial relation info, spatial relation RS may be configured. As a result, PC information and spatial relation RS information corresponding to the two TRPs may be configured through the two spatial relation info. Through this, the terminal transmits the UCI (i.e., CSI, ACK/NACK, SR, etc.) PUCCH by using the first spatial relation info in the first TO, and transmits the same UCI PUCCH by using the second spatial relation info in the second TO. In the present disclosure, a PUCCH resource configured with two spatial relation info may be referred to as an M-TRP PUCCH resource, and a PUCCH resource configured with one spatial relation info may be referred to as an S-TRP PUCCH resource.

Additionally, with respect to the proposal of the present disclosure, a unified TCI framework scheme may be considered. That is, the UL TCI state as well as the DL TCI state may be indicated together through the DL DCI (e.g., DCI format 1_1/1_2, etc.). Alternatively, only the UL TCI state may be indicated without indicating the DL TCI state through the DL DCI. Through this, schemes conventionally used for UL beam and power control (PC) configuration may be replaced through the above-described UL TCI state indication scheme.

As a specific example, one UL TCI state may be indicated through a TCI field in DL DCI. In this case, the UL TCI state may be applied to all PUSCH/PUCCHs after a certain time (e.g., beam application time), and may be applied to some or all of the indicated SRS resource sets. Alternatively, multiple UL TCI states (and/or DL TCI states) may be indicated through the TCI field in the DL DCI.

New methods in which a terminal simultaneously transmits several channels (CH)/reference signals (RSs) of the same type, the terminal simultaneously transmits several CHs/RSs of different types are being discussed. In the conventional scheme, the operation of the terminal transmitting a plurality of CHs/RSs in one time point (or in one time unit) is restricted. For example, for a terminal according to the conventional scheme, simultaneous transmission of a plurality of SRS resources belonging to different SRS resource sets is supported for uplink beam measurement, but simultaneous transmission of a plurality of different PUSCHs is not supported. Therefore, in order to support a more advanced terminal operation by alleviating the above restrictions, a method for simultaneously transmitting a plurality of CHs/RSs using a plurality of transmission elements of one terminal is being discussed.

For example, according to the present disclosure, a terminal may simultaneously perform uplink transmissions for multiple transmission targets using multiple transmission elements. In addition, the base station may simultaneously receive the uplink transmissions transmitted through the multiple transmission elements from the terminal in the multiple transmission targets. For example, a transmission element of the terminal may correspond to an antenna group or an antenna panel, and one antenna group/panel may correspond to one RS set (or one RS candidate set). That is, the antenna group/panel may be indicated/identified by the RS (candidate) set. For example, the transmission target of uplink transmission from the terminal may correspond to a TRP or a cell, and one TRP/cell may correspond to one CORESET group/pool. That is, the TRP/cell may be indicated/identified by the CORESET group/pool. For example, a simultaneous uplink transmission scheme for multiple transmission targets through multiple transmission elements may be referred to as simultaneous transmission across multi-panel (STxMP). However, the scope of the present disclosure is not limited by the name of the transmission scheme, the examples of the unit of the transmission element, and/or the examples of the unit of the transmission target.

As one example of STxMP operation, two PUSCHs corresponding to two UL TBs (e.g., a first PUSCH carrying a first TB, a second PUSCH carrying a second TB) may be scheduled on the same RB. In addition, an individual TCI state may be configured/indicated for each of a plurality of PUSCH transmissions. A plurality of TCI states may correspond to a plurality of transmission elements (e.g., a panel/RS set), respectively. In addition, one transmission element may correspond to one transmission target, respectively, and a plurality of transmission elements may correspond to one transmission target.

For example, a first spatial relation RS and a first power control (PC) parameter set (or a first UL TCI state) may be configured/indicated for a first PUSCH transmission, and a second spatial relation RS and a second PC parameter set (or a second UL TCI state) may be configured/indicated for a second PUSCH transmission. For example, the terminal may transmit a first PUSCH using a first panel corresponding to a first UL TCI state in a first time unit, and may transmit a second PUSCH using a second panel corresponding to a second UL TCI state in the first time unit. For example, the terminal may transmit (for the first CORESET pool) the first PUSCH through the first RS set based on the first UL TCI state in the first time unit, and may transmit the second PUSCH (for the second CORESET pool) through the second RS set based on the second UL TCI in the first time unit. A time unit may correspond to at least one of a symbol, a symbol group, a slot, or a slot group.

In this regard, when performing PUSCH scheduling through DCI, the base station may indicate whether to transmit the corresponding PUSCH through STxMP, single panel, or M-TRP repetition PUSCH. In this case, the terminal needs to have STxMP-related capabilities, and the STxMP mode needs to be enabled in advance through higher layer signaling (e.g., RRC signaling, etc.). For the indication, an existing SRS resource set indication field may be redefined and used, or a new DCI field may be introduced/defined.

In the present disclosure, when any information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., a MAC-CE)) signaling.

Improved Uplink DMRS

The present disclosure relates to examples related to a DMRS applied to each rank in an improved wireless communication system which supports more layers, more antenna ports or higher ranks compared to an existing wireless communication system for an uplink.

In an existing wireless communication system, a variety of combinations of information on a DMRS of up to rank 4 are defined in an uplink and one of a variety of combinations may be indicated through DCI (e.g., DCI format 0_1, etc.) scheduling a PUSCH. Accordingly, a terminal may perform PUSCH transmission by applying DMRS information corresponding to one combination indicated by DCI.

For example, a value of an antenna port field included in DCI may indicate the number of DMRS CDM (code division multiplexing) group(s) without data, DMRS port(s) (a set of DMRS port index(s)) or one (codepoint) of a variety of combinations (or codepoints) for at least one of the number of front-load symbols.

In PUSCH scheduling DCI, a rank (or the number of antenna ports or the number of layers) may be determined based on a value of a SRS resource indicator (SRI) field or may be determined based on a value of a precoding information (or PMI) field.

Meanwhile, an antenna port field included in PDSCH scheduling DCI in a downlink, for a rank exceeding 4 (e.g., rank 5, 6, 7, or 8), may indicate one of sets of DL DMRS ports and ranks.

In an existing wireless communication system, up to rank 4 is supported for an uplink, but in an improved wireless communication system, uplink transmission exceeding rank 4 may be supported. To this end, a specific method for defining or indicating DMRS information on uplink rank 5, 6, 7, or 8 is required.

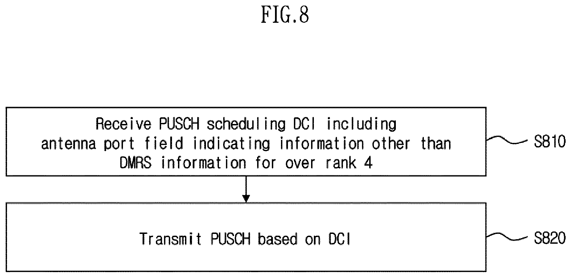

FIG. 8 is a diagram for describing an example of a method for transmitting an uplink demodulation reference signal of a terminal according to the present disclosure.

In S810, a terminal may receive DCI related to PUSCH scheduling from a network (e.g., from a base station).

A specific field in PUSCH scheduling DCI may indicate DMRS information or may indicate information other than DMRS information (or may be defined as a reserved field which does not indicate any information) according to a scope of a rank value.

For example, DCI may include a field indicating an antenna port. When a value of a rank for a PUSCH exceeds 4 (e.g., 5, 6, 7, or 8), a field indicating an antenna port in DCI may indicate information other than DMRS information related to a PUSCH. Alternatively, when a value of a rank for a PUSCH is equal to or less than 4 (e.g., 1, 2, 3, or 4), a field indicating an antenna port in DCI may indicate DMRS information associated with a PUSCH.

For example, DMRS information may include a combination of DMRS port(s) (or DMRS port index(s)). Furthermore, DMRS information may further include at least one of the number of DMRS CDM group(s) without data or the number of front-load symbols.

In the present disclosure, a field indicating an antenna port in DCI may be a field having a name called antenna ports, but a scope of the present disclosure is not limited by a name of a field, and it may include that a field with a different name indicates a different type of information according to a scope of a rank value according to the present disclosure.

When a value of a rank for a PUSCH exceeds 4, for DMRS information, only one combination may be defined and applied to each rank value. For example, for DMRS information (e.g., a DMRS port set or a set of DMRS port indexes), when only one candidate exists for each rank value, DMRS information to be applied by a terminal is predefined (or fixed DMRS information is always applied), so it may not be necessary to indicate DMRS information to a terminal.

If a value of a rank for a PUSCH exceeds 4, a field indicating an antenna port in DCI may indicate at least one of NDI, RV or MCS for an additional codeword or may indicate extended information on PTRS-DMRS association or may indicate information on PTRS-DMRS association for an additional codeword.

In S820, a terminal may transmit a PUSCH to a network (e.g., to a base station) based on DCI.

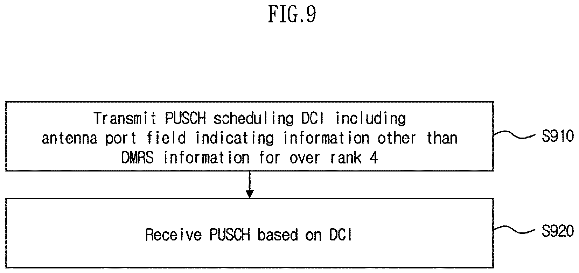

FIG. 9 is a diagram for describing an example of a method for receiving an uplink demodulation reference signal of a base station according to the present disclosure.

In S910, a base station may transmit DCI related to PUSCH scheduling to a terminal. In S920, a base station may receive a PUSCH transmitted from a terminal based on DCI.

For example, DCI may include an antenna port field indicating information other than DMRS information for over rank 4 and indicating DMRS information for rank 4 or lower. Since a specific description for DCI and PUSCH/DMRS transmission/reception based it is the same as a description in reference to FIG. 8, an overlapping description is omitted.

Hereinafter, specific examples of the above-described UL DMRS transmission or reception method are described.

An existing DMRS may be configured as one of two types. Type 1 may support up to 4 ports for a single-symbol DMRS (by using length 2 F-CDM and FDM) and support up to 8 ports for a double-symbol DMRS (by using length 2 F/T-CDM and FDM). Type 2 may support up to 6 ports for a single-symbol DMRS (by using length 2 F-CDM and 3 FDM) and support up to 12 ports for a double-symbol DMRS (by using length 2 F/T-CDM and 3 FDM). In addition, when the number of MU-MIMO terminals exceeds the number of orthogonal DMRS ports, a quasi-orthogonal port using a different scrambling ID may be used.

In an existing NR system, the maximum number of transmission ports supported for UL transmission is defined as 4 (i.e., 4Tx). To achieve a wider coverage and a higher throughput, supporting 8Tx UL transmission is under discussion. If a 8Tx antenna port is used, over 4 layers (per terminal) may be supported for PUSCH transmission. To increase system throughput performance, supporting up to 8 layers may be considered. When 4 ranks are increased to 8 ranks, one codeword may be supported as before or up to two codewords may be supported as in a downlink. For example, layer split may be applied to L layers exceeding 4 to map first floor (L/2) layers to codeword 0 and map the remaining layers to codeword 1 (floor(x) means the largest integer not exceeding x).

In addition, a method of indicating an UL DMRS port for over four layers may be defined. For it, a method of reusing a DMRS port indication defined for rank 5 to 8 downlink transmission or selecting and using a subset may be considered.

A DMRS port indication for a DL DMRS of ranks 5 to 8, for example, may include that a value of an antenna port field in DCI indicates a combination of a set of DMRS ports and ranks (or the number of DMRS ports). In other words, one port set may be indicated for each rank according to a DMRS type or one of two port set candidates may be indicated.

For example, for a type 1 DMRS, one port set may be indicated for each rank (i.e., only one port set candidate exists). For a type 2 DMRS, one of two port set candidates may be indicated for rank 5 and 6, respectively. For a type 2 DMRS, one port set may be indicated for rank 7 and 8, respectively (i.e., only one port set candidate exists). Accordingly, in downlink (or PDSCH scheduling) DCI, among the number of codepoints which may be indicated according to a bit size of a field indicating an antenna port, most of codepoints are in a reserved state without a mapped value (i.e., a DMRS port set) for rank 5 to 8.

For example, when it is DMRS type 2 in downlink DCI, the maximum number of OFDM symbols for a DL front load DMRS (or a value of a maxlength parameter) is 2 and two codewords (i.e., codeword 0 and 1) are enabled, an antenna port field is defined as having a 6-bit size. An example of DMRS information for rank 5 or higher mapped to a value of a 6-bit antenna port field is as follows.

[Table 6]

| Two Codewords: Codeword 0 enabled, Codeword 1 enabled | | | |
|---|---|---|---|
| Value | Number of DMRS CDM group(s) without data | DMRS port(s) | Number of front-load symbols |
| 0 | 3 | 0-4 | 1 |
| 1 | 3 | 0-5 | 1 |
| 2 | 2 | 0,1,2,3,6 | 2 |
| 3 | 2 | 0,1,2,3,6,8 | 2 |
| 4 | 2 | 0,1,2,3,6,7,8 | 2 |
| 5 | 2 | 0,1,2,3,6,7,8,9 | 2 |
| 6-63 | Reserved | Reserved | Reserved |

In an example of Table 6, in case of rank 5 (i.e., the number of DMRS ports is 5), the number of DMRS port set candidates which may be indicated is 2. In other words, for rank 5, one set of a set of DMRS port 0 to 4 corresponding to 0, a value of an antenna port field, and a set of DMRS port 0, 1, 2, 3, and 6 corresponding to 2, a value of an antenna port field, may be applied. Similarly, for rank 6, one of DMRS port sets corresponding to 1 or 3, a value of an antenna port field, may be applied. For rank 7, one DMRS port set indicated by 4, a value of an antenna port field, may be defined and for rank 8, one DMRS port set indicated by 5, a value of an antenna port field, may be defined. 6 to 63, a value of an antenna port field, may be reserved.

For an uplink DMRS, when the number of port set candidates is defined or defined as a subset in the same manner as for a downlink DMRS, there is inefficiency that most codepoints of a field indicating an UL DMRS antenna port of UL grant DCI are not used in a reserved state.

In addition, unlike PDSCH scheduling DCI that rank information is indicated through a field for a DMRS antenna port, in PUSCH scheduling DCI, rank information is indicated through a SRI (for non-codebook-based PUSCH scheduling) field or a PMI (for codebook-based PUSCH scheduling) field. Accordingly, a field size for indicating an antenna port for an UL DMRS may be determined based on the maximum number of DMRS port set candidates which may be indicated for each rank.

For example, when the number of OFDM symbols of a type 1 DMRS or a front load DMRS is configured as 1, the number of DMRS port set candidates which may be indicated for each of rank 1 to 4 may be defined as 6, 4, 1, and 1. A size of a field indicating a DMRS antenna port may be defined as a 3-bit size to indicate one of 6 candidates for rank 1. For rank 4, there is only one candidate, so only one of eight codepoints which may be indicated by a 3-bit field may be used and seven may be reserved. Alternatively, when there is only one candidate to be indicated, such an indication field itself may be unnecessary.

When a design characteristic of a field for an antenna port indication in DCI is considered, a ratio of a reserved codepoint of a corresponding field in uplink rank 5 or higher may be higher than for a downlink. For example, when only one DMRS port set candidate is defined for each of uplink rank 5 to 8 and only one set is fixedly applied, it may be unnecessary to indicate which DMRS port set is applied. In this case, all codepoints of a field indicating a DMRS antenna port in uplink DCI need not be used and may be used for other purpose.

Accordingly, a field for an uplink DMRS antenna port indication may define only one DMRS port set for each of rank 5 to 8 (differently from a structure of a downlink DMRS antenna port indication field). Accordingly, it may be unnecessary to inform which DMRS port set is applied to each of rank 5 to 8 through DCI.

For example, a set of DMRS port 0 to 4 may be defined for a rank value of 5, a set of DMRS port 0 to 5 may be defined for an uplink rank value of 6, a set of DMRS port 0, 1, 2, 3, 6, 7, and 8 may be defined for an uplink rank value of 7 and a set of DMRS port 0, 1, 2, 3, 6, 7, 8, and 9 may be defined for an uplink rank value of 8.

Alternatively, a set of DMRS port 0, 1, 2, 3, and 6 may be defined for an uplink rank value of 5, a set of DMRS port 0 to 5 may be defined for an uplink rank value of 6, a set of DMRS port 0, 1, 2, 3, 6, 7, and 8 may be defined for an uplink rank value of 7 and a set of DMRS port 0, 1, 2, 3, 6, 7, 8, and 9 may be defined for an uplink rank value of 8.

Alternatively, a set of DMRS port 0 to 4 may be defined for an uplink rank value of 5, a set of DMRS port 0, 1, 2, 3, 6, and 8 may be defined for an uplink rank value of 6, a set of DMRS port 0, 1, 2, 3, 6, 7, and 8 may be defined for an uplink rank value of 7 and a set of DMRS port 0, 1, 2, 3, 6, 7, 8, and 9 may be defined for an uplink rank value of 8.

Alternatively, a set of DMRS port 0, 1, 2, 3, and 6 may be defined for an uplink rank value of 5, a set of DMRS port 0, 1, 2, 3, 6, and 8 may be defined for an uplink rank value of 6, a set of DMRS port 0, 1, 2, 3, 6, 7, and 8 may be defined for an uplink rank value of 7 and a set of DMRS port 0, 1, 2, 3, 6, 7, 8, and 9 may be defined for an uplink rank value of 8.

As such, when only one DMRS port set is defined for each of rank 5 to 8, there is no need to indicate a DMRS port set to a terminal through PUSCH scheduling DCI and one DMRS port set defined (fixed) for each rank may be applied to PUSCH transmission.

Accordingly, a field for indicating a DMRS antenna port in DCI may be defined as indicating different information according to a scope of a rank value. For example, for rank 4 or lower, an antenna port field may indicate DMRS information (e.g., at least one of DMRS port(s), the number of DMRS CDM group(s) without data or the number of front-load symbols) according to an original purpose. For over rank 4 (or rank 5 or higher), all or part of values which may be indicated by an antenna port field may indicate other information other than DMRS information or may be reserved.

For example, in rank 5 or higher, as two codewords are used (or enabled), it may be required to additionally indicate at least one of NDI, RV or MCS associated with a second codeword through DCI. For it, a field indicating an antenna port in DCI may be defined as indicating codeword-specific information (as other information other than DMRS information). A NDI, RV and MCS field defined in UL DCI may be defined as being associated with a first codeword, a field for indicating at least one of NDI, RV or MCS associated with a second codeword may not be additionally defined and all or part of values (or codepoints) of a field for indicating an antenna port may be used. Accordingly, an increase in DCI overhead for supporting an additional codeword may be prevented.

Additionally or alternatively, in addition to an existing PTRS-DMRS association field in DCI, all/part of bit values of a field for indicating an antenna port may be defined as indicating a PTRS-DMRS association/mapping relationship.

In this regard, in an existing wireless communication system, up to two PTRSs may be supported by considering four partially-coherent/non-coherent antenna ports. Meanwhile, for a 8Tx antenna port, according to actual antenna implementation, coherence between 8 antenna ports may be absent or 4 pairs of coherent antennas may be considered. In this case, two PTRS ports are not sufficient and performance degradation due to a phase noise, etc. may not be ignored. Accordingly, it may be necessary to increase the maximum number of PTRS ports and for it, according to 8Tx UL codebook design for partially coherent antenna ports, the maximum number of PTRS ports increased compared to before may be determined.

For example, considering that the maximum number of DMRS ports increases from 4 to 8, overhead of information indicating an association or mapping relationship between a PTRS port and a DMRS port may also increase. When the number of PTRS ports is 1 and the number of DMRS ports is 4, it is sufficient to indicate one of 4C1(=4) mapping relationships, but when the number of PTRS ports is 1 and the number of DMRS ports is 8, it should be able to indicate one of 8C1(=8) mapping relationships, so a size of a field indicating a mapping relationship between a PTRS port and a DMRS port should be also increased compared to before. In addition, even when the maximum number of PTRS ports is 2 before, but it is required to support over 2 PTRS ports for UL transmission of rank 5 or higher, a size of a field indicating a mapping relationship between a PTRS port and a DMRS port should be also increased. Accordingly, it may be defined as maintaining a size of an existing PTRS-DMRS association field in DCI, but as indicating a PTRS-DMRS mapping relationship by considering some bit values of an antenna port field in rank 5 or higher along with a bit value of an existing PTRS-DMRS association field (or by a joint encoding method).

Additionally or alternatively, when two codewords are used in rank 5 or higher, PTRS transmission may be supported per codeword. In this case, an existing PTRS-DMRS association field in DCI is defined as relating to a first codeword, and a bit value of a field for indicating an antenna port, for rank 5 or higher, may be defined as indicating a PTRS-DMRS association/mapping relationship associated with a second codeword.

Other than these examples, a bit value (or a codepoint) of a field for indicating a DMRS antenna port for rank 5 or higher may be defined and used for indicating a variety of different information other than DMRS information.

General Device to which the Present Disclosure may be applied

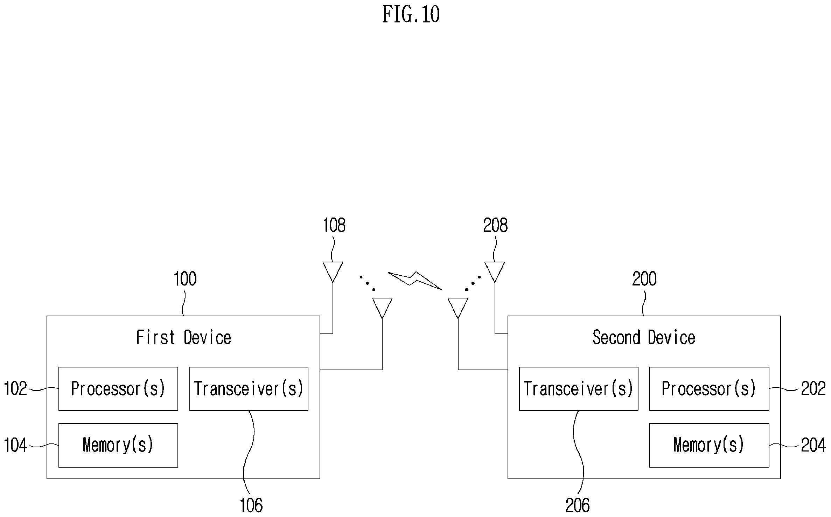

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc.

mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method performed by a terminal in a wireless communication system, the method comprising:

receiving from a network downlink control information (DCI) related to scheduling of a physical uplink shared channel (PUSCH); and
transmitting to the network the PUSCH based on the DCI,
wherein the DCI includes a field indicating an antenna port,
wherein based on a value of a rank for the PUSCH exceeding 4, the field indicating the antenna port indicates information other than the antenna port for a demodulation reference signal (DMRS) associated with the PUSCH.

2.   The method of claim 1, wherein:
based on the value of the rank for the PUSCH being equal to or less than 4, the field indicating the antenna port indicates a port of the DMRS associated with the PUSCH.

3.   The method of claim 1, wherein:
based on the value of the rank for the PUSCH exceeding 4, for the value of each rank, one set of antenna ports for the DMRS associated with the PUSCH is defined.

4.   The method of claim 3, wherein:

the set of DMRS port 0 to 4 is defined for 5, the value of the rank,
the set of DMRS port 0 to 5 is defined for 6, the value of the rank,
the set of DMRS port 0, 1, 2, 3, 6, 7, and 8 is defined for 7, the value of the rank, and
the set of DMRS port 0, 1, 2, 3, 6, 7, 8, and 9 is defined for 8, the value of the rank.

5.   The method of claim 3, wherein:

the set of DMRS port 0, 1, 2, 3, and 6 is defined for 5, the value of the rank,
the set of DMRS port 0 to 5 is defined for 6, the value of the rank,
the set of DMRS port 0, 1, 2, 3, 6, 7, and 8 is defined for 7, the value of the rank, and
the set of DMRS port 0, 1, 2, 3, 6, 7, 8, and 9 is defined for 8, the value of the rank.

6.   The method of claim 3, wherein:

the set of DMRS port 0 to 4 is defined for 5, the value of the rank,
the set of DMRS port 0, 1, 2, 3, 6 and 8 is defined for 6, the value of the rank,
the set of DMRS port 0, 1, 2, 3, 6, 7, and 8 is defined for 7, the value of the rank, and
the set of DMRS port 0, 1, 2, 3, 6, 7, 8, and 9 is defined for 8, the value of the rank.

7.   The method of claim 3, wherein:

the set of DMRS port 0, 1, 2, 3, and 6 is defined for 5, the value of the rank,
the set of DMRS port 0, 1, 2, 3, 6 and 8 is defined for 6, the value of the rank,
the set of DMRS port 0, 1, 2, 3, 6, 7, and 8 is defined for 7, the value of the rank, and
the set of DMRS port 0, 1, 2, 3, 6, 7, 8, and 9 is defined for 8, the value of the rank.

8. The method of claim 1, wherein:

the DCI includes information on a first new data indicator (NDI), a first redundancy version (RV) and a first modulation and coding scheme (MCS) for a first codeword,
based on the value of the rank for the PUSCH exceeding 4, the field indicating the antenna port indicates information on at least one of a second NDI, a second RV or a second MCS for a second codeword.

9. The method of claim 1, wherein:
based on the value of the rank for the PUSCH exceeding 4, the field indicating the antenna port indicates information on PTRS(phase tracking reference signal)-DMRS association.

10. The method of claim 1, wherein:

the DCI includes information on first PTRS-DMRS association for a first codeword,
based on the value of the rank for the PUSCH exceeding 4, the field indicating the antenna port indicates information on second PTRS-DMRS association for a second codeword.

11. The method of claim 1, wherein:
the value of the rank for the PUSCH is determined based on at least one of the field indicating a sounding reference signal (SRS) resource in the DCI or the field indicating precoding information in the DCI.

12. A terminal in a wireless communication system, the terminal comprising:

at least one transceiver; and
at least one processor connected to the at least one transceiver,
wherein the at least one processor is configured to:

receive through the at least one transceiver from a network downlink control information (DCI) related to scheduling of a physical uplink shared channel (PUSCH); and
transmit through the at least one transceiver to the network the PUSCH based on the DCI,
wherein the DCI includes a field indicating an antenna port,
wherein based on a value of a rank for the PUSCH exceeding 4, the field indicating the antenna port indicates information other than the antenna port for a demodulation reference signal (DMRS) associated with the PUSCH.

13. A method performed by a base station in a wireless communication system, the method comprising:

transmitting to a terminal downlink control information (DCI) related to scheduling of a physical uplink shared channel (PUSCH); and
receiving from the terminal the PUSCH based on the DCI,
wherein the DCI includes a field indicating an antenna port,
wherein based on a value of a rank for the PUSCH exceeding 4, the field indicating the antenna port indicates information other than the antenna port for a demodulation reference signal (DMRS) associated with the PUSCH.

14. A base station in a wireless communication system, the base station comprising:

at least one transceiver; and
at least one processor connected to the at least one transceiver,
wherein the at least one processor is configured to:

transmit through the at least one transceiver to a terminal downlink control information (DCI) related to scheduling of a physical uplink shared channel (PUSCH); and
receive through the at least one transceiver from the terminal the PUSCH based on the DCI,
wherein the DCI includes a field indicating an antenna port,
wherein based on a value of a rank for the PUSCH exceeding 4, the field indicating the antenna port indicates information other than the antenna port for a demodulation reference signal (DMRS) associated with the PUSCH.

15. A processing device configured to control a terminal in a wireless communication system, the processing apparatus comprising:

at least one processor; and
at least one computer memory operably connected to the at least one processor and storing instructions for performing a method according to any one of Claim 1 to Claim 11 based on being executed by the at least one processor.

16. At least one non-transitory computer-readable medium storing at least one instruction, wherein:
the at least one instruction executable by at least one processor controls a device to perform a method according to any one of Claim 1 to Claim 11 in a wireless communication system.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

## FIG.4

FIG.5

Resource grid

A carrier
(up to 3300 subcarriers, i.e., 275 RBs)

A BWP

1 RB=12 subcarrier

1 RE

1 subcarrier

1 Symbol

k=0

l=0 ‧‧‧‧‧

FIG.6

FIG.7

EP 4 518 524 A1

TRP 1       TRP 2

Layer group #1    Layer group #2
for CW #1        for CW #1

UE1

(a)

TRP 1       TRP 2

Layer group #1    Layer group #2
for CW #1        for CW #2

UE1

(b)

FIG.8

```
┌─────────────────────────────────────────────────┐
│         Receive PUSCH scheduling DCI including   │
│   antenna port field indicating information other than  │──  S810
│         DMRS information for over rank 4          │
└─────────────────────────────────────────────────┘
                         │
                         ▼
┌─────────────────────────────────────────────────┐
│                                                 │
│            Transmit PUSCH based on DCI          │──  S820
│                                                 │
└─────────────────────────────────────────────────┘
```

FIG.9

| | |
|---|---|
| Transmit PUSCH scheduling DCI including antenna port field indicating information other than DMRS information for over rank 4 | S910 |

$\downarrow$

| | |
|---|---|
| Receive PUSCH based on DCI | S920 |

FIG.10

<table>
<tr><td colspan="2" style="text-align:center">**INTERNATIONAL SEARCH REPORT**</td><td>International application No.<br><br>**PCT/KR2023/005649**</td></tr>
</table>

| A. | CLASSIFICATION OF SUBJECT MATTER |
|---|---|
| | **H04W 72/232**(2023.01)i; **H04L 5/00**(2006.01)i; **H04L 27/26**(2006.01)i; **H04B 7/0413**(2017.01)i; **H04W 72/12**(2009.01)i |

According to International Patent Classification (IPC) or to both national classification and IPC

| B. | FIELDS SEARCHED |
|---|---|

Minimum documentation searched (classification system followed by classification symbols)

H04W 72/232(2023.01); H04B 7/0456(2017.01); H04L 5/00(2006.01); H04W 24/08(2009.01); H04W 72/12(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH scheduling DCI, antenna port field, DMRS antenna port, PUSCH rank

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021-180897 A1 (FRAUNHOFER GESELLSCHAFT ZUR FÖRDERUNG DER ANGEWANDTEN FORSCHUNG E.V.) 16 September 2021 (2021-09-16)<br>See pages 9-10 and 63; and figure 7. | 1-16 |
| A | US 2021-0050889 A1 (LG ELECTRONICS INC.) 18 February 2021 (2021-02-18)<br>See paragraphs [0455]-[0532]; and figure 20. | 1-16 |
| A | US 2021-0360682 A1 (LENOVO (SINGAPORE) PTE. LTD.) 18 November 2021 (2021-11-18)<br>See paragraphs [0016]-[0074]. | 1-16 |
| A | WO 2021-064705 A1 (TELEFONAKTIEBOLAGET LM ERICSSON (PUBL)) 08 April 2021 (2021-04-08)<br>See paragraphs [0080]-[0109]; and figure 3. | 1-16 |
| A | SAMSUNG (MODERATOR). New WID: MIMO Evolution for Downlink and Uplink. RP-213598, 3GPP TSG RAN Meeting #94e. 12 December 2021.<br>See sections 3-4.1. | 1-16 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/005649**

| Patent document cited in search report | | | Publication date (day/month/year) | Patent family member(s) | | | Publication date (day/month/year) |
|---|---|---|---|---|---|---|---|
| WO | 2021-180897 | A1 | 16 September 2021 | CN | 115362653 | A | 18 November 2022 |
| | | | | EP | 3879738 | A1 | 15 September 2021 |
| | | | | EP | 4118779 | A1 | 18 January 2023 |
| | | | | JP | 2023-510639 | A | 14 March 2023 |
| US | 2021-0050889 | A1 | 18 February 2021 | CN | 114303324 | A | 08 April 2022 |
| | | | | EP | 4020833 | A1 | 29 June 2022 |
| | | | | EP | 4020833 | A4 | 07 December 2022 |
| | | | | KR | 10-2022-0046602 | A | 14 April 2022 |
| | | | | KR | 10-2537736 | B1 | 31 May 2023 |
| | | | | US | 11632155 | B2 | 18 April 2023 |
| | | | | WO | 2021-034070 | A1 | 25 February 2021 |
| US | 2021-0360682 | A1 | 18 November 2021 | CN | 112771785 | A | 07 May 2021 |
| | | | | EP | 3857716 | A1 | 04 August 2021 |
| | | | | US | 11096211 | B2 | 17 August 2021 |
| | | | | US | 2020-0107353 | A1 | 02 April 2020 |
| | | | | WO | 2020-065596 | A1 | 02 April 2020 |
| | | | | WO | 2020-065596 | A9 | 20 August 2020 |
| WO | 2021-064705 | A1 | 08 April 2021 | CN | 114731258 | A | 08 July 2022 |
| | | | | EP | 4042627 | A1 | 17 August 2022 |
| | | | | US | 2022-0330254 | A1 | 13 October 2022 |

Form PCT/ISA/210 (patent family annex) (July 2022)